(19) Europäisches Patentamt / European Patent Office / Office européen des brevets

(11) **EP 3 238 406 B1**

(12) **FASCICULE DE BREVET EUROPEEN**

(45) Date de publication et mention
de la délivrance du brevet:
**31.07.2019 Bulletin 2019/31**

(51) Int Cl.:
***H04L 29/06*** *(2006.01)*

(21) Numéro de dépôt: **15817454.0**

(86) Numéro de dépôt international:
**PCT/FR2015/053216**

(22) Date de dépôt: **26.11.2015**

(87) Numéro de publication internationale:
**WO 2016/083740 (02.06.2016 Gazette 2016/22)**

(54) **PROCÉDÉ DE TRAITEMENT D'UNE REQUÊTE DE LIVRAISON DE DONNÉES**

BEHANDLUNGSMETHODE VON ANWENDUNGSDATEN AUSGABE

TREATMENT METHOD OF APPLICATION DATA DELIVERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2014 FR 1461650**

(43) Date de publication de la demande:
**01.11.2017 Bulletin 2017/44**

(73) Titulaire: **B<>COM
35510 Cesson-Sévigné (FR)**

(72) Inventeur: **HOUZE, Patrice
35000 Rennes (FR)**

(74) Mandataire: **Ermeneux, Bertrand
AVOXA
5 allée Ermengarde d'Anjou
ZAC Atalante Champeaux
CS 40824
35108 Rennes (FR)**

(56) Documents cités:
**EP-A1- 2 704 449        EP-A2- 2 613 543
WO-A1-2014/096463**

**Description**

**1. Domaine de l'invention**

Le domaine de l'invention est celui de la livraison de données d'un serveur à un client par l'intermédiaire d'au moins un réseau de télécommunications.

L'invention peut notamment, mais non exclusivement, s'appliquer à la livraison de flux de données multimédia selon une technologie de type « http adaptive streaming ».

**2. Présentation de l'art antérieur**

On connait de la norme MPEG-DASH (pour « Dynamic Adaptive Streaming over http », en anglais) une technique de livraison de données multimédia par un équipement serveur http (pour « Hypertext Transfer Protocol », en anglais) à un équipement client DASH, selon laquelle des données multimédia sont découpées en segments, qui sont encodés à plusieurs valeurs de débits. Cette technique est notamment décrite dans l'article intitulé « Dynamic Adaptive Streaming over http- Standards and Design Principles », par Thomas Stockhammer, publié dans les Proceedings de la « ACM Conférence on Multimedia Systems, en février 2011, pages 133-144. Un autre exemple se trouve dans WO2014/096463.

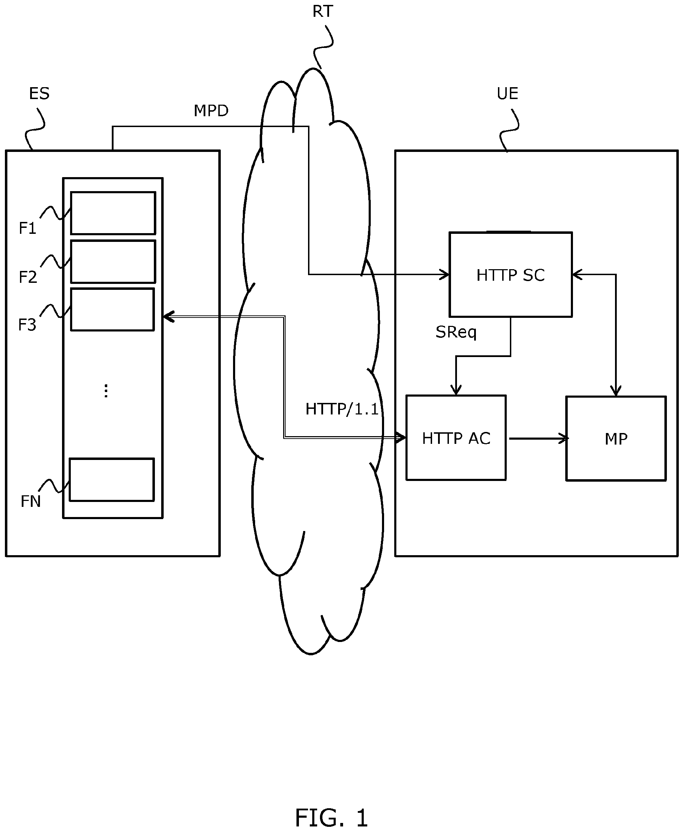

En relation avec la Figure **1,** l'équipement client DASH UE se connecte à l'équipement serveur ES par l'intermédiaire d'un réseau de communication RT. L'équipement serveur ES dispose de plusieurs fichiers de données F1, F2, F3, ...FN correspondent donc à un même segment, encodé à des qualités différentes. L'équipement client DASH qui souhaite recevoir les flux de données multimédia, commence par demander à l'équipement serveur de lui transmettre un fichier de description de type MPD (pour « Media Présentation Description », en anglais) des données multimédia. Ce fichier décrit notamment les fichiers correspondant aux segments disponibles au niveau de l'équipement serveur et leur débit associé. Le client exploite les données de description de ce fichier pour déterminer, pour chaque segment, le fichier qui correspond au débit de son choix, en fonction de la bande passante dont il dispose à un instant donné et pour définir la requête de livraison à émettre vers l'équipement serveur.

Un premier avantage de cette technique est qu'elle est simple. Le fait d'être basée sur le protocole http résout le problème du passage des pare-feux (« firewalls », en anglais) et l'équipement serveur se résume à un serveur WEB, générique, peu coûteux et facile à déployer à grande échelle.

Un deuxième avantage de cette technique qu'elle est adaptative. L'équipement client adapte sa requête à la bande passante dont il dispose, en choisissant un segment encodé à un débit plus ou moins élevé. Par exemple, l'équipement client demande d'abord la livraison de fichiers de débit élevé pour les premiers segments, puis bascule sur des fichiers de débit moindre pour les segments suivants, lorsqu'il rencontre un problème momentané de bande passante.

**3. Inconvénients de l'art antérieur**

Un premier inconvénient de cette technique réside dans la grande taille des segments disponibles au niveau du serveur, qui correspond dans le cas d'une séquence vidéo, à une durée comprise entre 3 et 10 secondes. Lorsque les conditions réseau ne sont pas optimales, sa transmission peut subir un retard ou latence qui n'est pas compatible avec des contraintes temps réel.

Un inconvénient de cette technique vient, du fait qu'elle utilise http qui s'appuie sur le protocole de contrôle de transmission TCP (pour « Transport Control Protocol », en anglais). Un tel protocole établit une connexion entre l'équipement serveur et l'équipement client et permet la transmission de données de façon sûre par un échange d'accusés-réception. Néanmoins cette signalisation introduit un délai, du fait des retransmissions de paquets de données perdus, qui exclut la possibilité de réaliser une livraison temps réel.

**4. Objectifs de l'invention**

L'invention vient améliorer la situation.

L'invention a notamment pour objectif de pallier ces inconvénients de l'art antérieur.

Plus précisément, un objectif de l'invention est de proposer une solution qui permette de livrer des données multimédia en temps réel, c'est-à-dire avec des contraintes de latence proches de celles des services conversationnels, tout en gardant les bénéfices de la technologie DASH adaptive streaming, notamment en termes de coût de déploiement.

## 5. Exposé de l'invention

Ces objectifs, ainsi que d'autres qui apparaîtront par la suite, sont atteints à l'aide d'un procédé de traitement d'une requête de livraison de données émise par un terminal client à destination d'un équipement serveur distant par l'intermédiaire d'un réseau de télécommunications, ledit terminal étant adapté pour accéder audit réseau par au moins deux liens selon des types d'accès distincts, lesdites données ayant été encodées en au moins un flux à au moins un débit prédéterminé, ledit flux ayant été préalablement découpé en une pluralité de segments.

Le procédé selon l'invention est particulier en ce qu'il comprend les étapes suivantes, mises en oeuvre pour un segment dudit au moins un flux de données :

- Détermination d'au moins une taille de sous-segment au moins en fonction du nombre de liens et d'une taille du flux de données à livrer;

- Calcul d'un partitionnement du segment en sous-segments en fonction de ladite au moins une taille déterminée et d'une répartition des sous-segments sur la pluralité de liens au moins en fonction d'un ordonnancement des sous-segments dans le partitionnement calculé et d'une contrainte de délai prédéterminée ; et

- Emission d'une pluralité de requêtes de transmission des sous-segments au serveur sur la pluralité de liens, au moins en fonction de la répartition calculée, une requête de transmission d'un sous-segment sur un lien comprenant au moins un identifiant du segment, un index de début de sous-segment et un index de fin de sous-segment.

Avec l'invention, la requête de livraison d'un segment du flux de données est convertie en une pluralité de sous-requêtes sur chacun des liens disponibles pour accéder au réseau de communication. Les sous-requêtes portent sur un ou plusieurs sous-segments, de tailles inférieures à celles du segment entier.

Ainsi, l'invention repose sur une approche tout à fait nouvelle et inventive de la livraison de données multimédia, basée d'une part, sur une décision de découpage d'un segment de données codées en sous-segments de tailles adaptées au moins en fonction du nombre de liens disponibles en parallèle et d'autre part, sur une répartition des sous-requêtes sur ces liens.

Le fait de requérir des sous-segments de tailles inférieures à celle du segment permet de réduire la latence de livraison. La mise à contribution de plusieurs accès au réseau pour une même livraison permet d'optimiser l'exploitation des ressources disponibles et de réduire le temps global de livraison.

Un avantage de l'invention est de ne pas modifier les fonctionnements du réseau et de l'équipement serveur. En effet, l'invention s'appuie sur un fonctionnement connu d'un serveur web, qui lui permet de répondre à une requête de livraison d'un tronçon d'un flux de données multimédia comprenant des informations de positionnement de ce tronçon dans le fichier.

Selon une caractéristique avantageuse de l'invention, le procédé comprend en outre une étape de mesure de paramètres représentatifs d'un état du réseau sur la pluralité de liens, mise en oeuvre sur réception de sous-segments en provenance du serveur sur lesdits liens en réponse aux requêtes émises et une étape de mise à jour des étapes de détermination d'une taille de sous-segment par lien et de calcul d'un partitionnement et d'une répartition des sous-segments sur les liens en fonction des paramètres mesurés.

Suite à la réception des premiers sous-segments sur les différents liens, des paramètres représentatifs d'un état du réseau sur ces liens sont mesurés et exploités pour adapter la taille d'un sous-segment par lien et affiner la répartition des requêtes entre les différents liens.

Les paramètres réseau mesurés sont caractéristiques de l'efficacité d'un lien et comprennent à titre d'exemple le temps de latence, le débit maximal, le taux de perte et la gigue réseau.

Avantageusement, on peut affecter des poids aux liens en fonction des paramètres réseau calculés prendre en compte ces poids dans l'étape de répartition des sous-segments sur les liens.

Selon un autre aspect de l'invention, le procédé comprend une étape de détermination d'une fréquence de transmission des requêtes sur un lien en fonction des paramètres réseau mesurés et en ce que les requêtes de transmission des sous-segments sur ledit lien sont émises aux fréquences de transmission déterminées.

Ceci permet la mise en place d'un mode rafale, selon lequel l'équipement client n'attend pas la réponse de l'équipement serveur à une première requête sur un lien pour en émettre une autre sur le même lien, ceci afin de ne pas être contraint par un mode séquentiel qui ralentirait la transmission des données d'un lien. La fréquence ou cadence d'émission est choisie de façon adaptée afin de ne pas saturer le lien réseau.

Selon un autre aspect de l'invention, le procédé comprend en outre une étape d'obtention d'une structure de codage comprenant au moins une information représentative d'un type de données codées dans le segment associée à une information de position des données de ce type, une étape d'affectation d'un niveau de priorité de décodage aux sous-segments d'un segment en fonction de l'information de type et de règles prédéterminées, et en ce que l'étape de partitionnement du segment en sous-segments et l'étape de répartition des sous-segments sur la pluralité de liens prennent en outre en compte les niveaux de priorités de décodage affectés aux sous-segments.

Un avantage de l'attribution de niveaux de priorités de décodage aux sous-segments est de permettre la mise en place d'une stratégie de répartition des sous-requêtes sur les liens disponibles, qui privilégie les sous-segments les plus prioritaires et les requête sur les liens les plus fiables. Par exemple, un niveau de priorité de décodage élevé est attribué aux sous-segments contenant des données codées appartenant à une image de type Intra (ou I), car une telle image sert de référence au décodage d'autres images. Il est donc important d'assurer sa livraison de façon fiable. On comprend que cela nécessite l'obtention de l'information de position des frontières entre les images dans le sous-segment avant de requêter le sous-segment correspondant. Cette indexation doit être préalablement obtenue par le client.

Selon un autre aspect de l'invention, l'information représentative d'un type de données est obtenue en émettant une requête de description du segment à l'équipement serveur et en recevant un fichier de description d'une structure de codage du segment comprenant ladite information..

La norme MPEG DASH a prévu un profil de type « On Demand » pour permettre à un client d'une application de vidéo à la demande (« Video on Demand », en anglais) de se déplacer dans un segment d'un flux de données et réaliser des fonctions de lecture rapide de type « avance rapide (pour «fast forward », en anglais). La mise en oeuvre de telles fonctions nécessite en effet de connaître la structure des données codées afin de repérer le positionnement des images de référence I et déclencher le saut d'une image I à une autre. Les informations de description de la structure de codage du segment sont contenues dans un fichier de description de type SSIX (pour « sub-segment index », en anglais)).

L'invention propose avantageusement de tirer parti de ces informations de description à des fins temps réel pour mieux découper un segment en sous-segments et les répartir sur les différents liens d'accès au réseau.

Selon un autre aspect de l'invention, l'étape de mesure de paramètres réseau comprend la mesure d'un temps de latence entre l'émission d'une requête de transmission d'au moins un sous-segment sur un lien et la réception du sous segment requêté et en ce que, ledit procédé comprend, en cas de temps de latence mesuré supérieur à un seuil prédéterminé pour ladite requête, une étape de décision de déclenchement d'une action au moins en fonction d'un niveau de priorité de décodage affecté au sous-segment requêté, ladite action appartenant à un groupe comprenant au moins :

- Retransmission d'une nouvelle requête de transmission du même sous-segment sur un autre lien ;

- Annulation de la requête en cours.

Un avantage est de détecter rapidement qu'un problème de transmission est survenu et de décider d'une solution à mettre en place pour obtenir les sous-segments requêtés par un autre lien, en minimisant le délai supplémentaire sur la livraison globale des données.

La prise en compte du niveau de priorité des données pour le décodage d'un sous-segment dans la répartition des sous-requêtes sur les liens disponibles, proposée par l'invention, permet de limiter le préjudice dû à une éventuelle non-réception de ce sous-segment pour le décodage ultérieur des données multimédia, notamment en termes de qualité de restitution.

Si le niveau de priorité du sous segment est faible, l'action déclenchée sera l'annulation pure et simple de la requête. Le traitement ultérieur des données sera fait sans le sous-segment manquant. Un avantage d'annuler une sous-requête, plutôt que de la laisser suivre son cours est d'éviter toute signalisation inutile et l'occupation de bande passante associée.

Si au contraire, le niveau de priorité du sous-segment est élevé, l'action déclenchée est d'émettre une nouvelle requête pour le même sous-segment sur un autre lien. Les deux actions peuvent bien sûr être déclenchées simultanément.

Selon un autre aspect de l'invention, le terminal client et l'équipement serveur sont agencés pour communiquer selon un protocole de communication avec échange d'accusé-réception, et lorsque l'action décidée est une annulation de la requête en cours, le procédé comprend une étape de transmission d'un message d'accusé-réception au serveur.

Il s'agit de faire croire à l'équipement serveur que le sous-segment a bien été reçu. Ceci permet de contourner un mécanisme d'accusé-réception imposé par un protocole de communication en mode connecté, de type TCP et d'en éviter la lourdeur.

Selon un autre aspect de l'invention, le fichier de description reçu comprend en outre une information représentative d'un groupe d'appartenance des données et au moins un premier flux de données encodées étant disponible à un premier débit et un deuxième flux à un deuxième débit, le procédé comprend une étape de choix d'un flux dans lequel requérir un sous-segment du segment courant, au moins en fonction des paramètres réseau mesurés, du niveau de priorité de décodage du sous-segment du groupe d'appartenance des données du sous-segment et de la contrainte de délai prédéterminée.

Un avantage est de tirer parti au mieux de chaque représentation ou qualité de flux disponible au niveau du serveur pour optimiser la livraison au sein d'un segment. En plus d'une optimisation de l'utilisation des ressources basée sur une répartition des sous-segments sur les liens disponibles avec une granularité plus fine que le segment, l'invention permet aussi une adaptation en débit plus fine que l'art antérieur.

En effet, pour un sous segment donné, on choisit le flux de données de débit le plus élevé possible permettant d'une part de satisfaire la contrainte de délai prédéterminée, tout en prenant en compte le groupe d'appartenance des données codées dans le sous-segment. Par exemple, ce groupe d'appartenance est un GoP comprenant une image de type Intra et d'autres images de type P ou B qui dépendent de l'image I. On comprend que les images d'un même GoP et donc les sous-segments correspondants doivent être requêtés dans un même flux. L'invention permet donc une adaptation Intra par Intra.

Le procédé qui vient d'être décrit dans ses différents modes de réalisation est avantageusement mis en oeuvre par un dispositif de traitement d'une requête de livraison de données multimédia.

L'invention concerne donc un dispositif de traitement d'une requête de livraison d'un flux de données multimédia émise par un terminal client à destination d'un équipement serveur distant par l'intermédiaire d'un réseau de télécommunications, ledit terminal étant adapté pour accéder audit réseau par au moins deux liens selon des types d'accès distincts, lesdites données ayant été encodées en au moins un flux à au moins un débit prédéterminé, ledit flux ayant été préalablement découpé en une pluralité de segments.

Selon l'invention, ledit dispositif comprend les unités suivantes, mises en oeuvre pour un segment dudit au moins un flux de données :

- Détermination d'au moins une taille de sous-segment au moins en fonction du nombre de liens et d'une taille du flux de données à livrer;

- Calcul d'un partitionnement du segment en sous-segments en fonction de ladite au moins une taille déterminée et d'une répartition des sous-segments sur la pluralité de liens au moins en fonction d'un ordonnancement des sous-segments dans le partitionnement calculé et d'une contrainte de délai prédéterminée; et

- Emission d'une pluralité de requêtes de transmission des sous-segments au serveur sur la pluralité de liens, au moins en fonction de la répartition calculée, une requête de transmission d'un sous-segment sur un lien comprenant au moins un identifiant du segment, un index de début de sous-segment et un index de fin de sous-segment.

Un tel dispositif peut avantageusement être intégré dans un terminal client.

L'invention concerne donc aussi un terminal client adapté pour accéder à un réseau de communication par au moins deux liens selon des types d'accès distincts, comprenant un dispositif de traitement d'une requête de livraison selon l'invention.

En variante, un tel dispositif peut aussi être intégré dans un module proxy adapté pour être placé en amont d'un équipement client. L'invention concerne donc également un module proxy agencé en coupure d'un terminal client et d'au moins deux liens selon des types d'accès distincts pour accéder à un réseau de communication, caractérisé en ce qu'il comprend un dispositif de traitement d'une requête de livraison de données selon l'invention.

L'invention concerne encore un programme d'ordinateur comportant des instructions pour la mise en oeuvre des étapes d'un procédé d'émission d'une requête de livraison d'un flux de données multimédia tel que décrit précédemment, lorsque ce programme est exécuté par un processeur.

Ce programme peut utiliser n'importe quel langage de programmation. Ils peuvent être téléchargés depuis un réseau de communication et/ou enregistrés sur un support lisible par ordinateur.

L'invention se rapporte enfin à un support d'enregistrement, lisible par un processeur, intégrés ou non au dispositif d'émission d'une requête de livraison d'un flux de données multimédia selon l'invention, éventuellement amovible, mémorisant respectivement un programme d'ordinateur mettant en oeuvre un procédé d'émission, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1,** déjà décrite, présente de façon schématique les échanges mis en oeuvre par un équipement client avec un équipement serveur pour la livraison d'un flux de données multimédia en adaptive streaming, selon l'art antérieur ;

- la figure **2** présente de façon schématique un équipement client disposant de plusieurs liens d'accès à un réseau de télécommunications pour requérir la livraison d'un flux de données multimédia à un équipement serveur, selon l'invention ;

- la figure **3** présente de façon schématique les étapes d'un procédé d'émission d'une requête de livraison d'un flux multimédia par un équipement client selon un mode de réalisation de l'invention ;

- la figure **4A** présente de façon schématique un exemple de structure d'une séquence d'images codées mise en oeuvre dans un mode de réalisation de l'invention ;

- la figure **4B** présente un exemple de quantités d'informations codées à livrer par type de structure d'images selon un schéma de codage de type MPEG ;
les figures **5A**, **5B** et **5C** illustrent de façon schématique trois exemples de répartition des sous-segments découpés dans un segment sur les différents liens d'accès au réseau de télécommunications selon l'invention ;

- la figure **6** présente de façon schématique un diagramme des flux échangés entre un équipement client, un module proxy et un équipement serveur pour la livraison d'un flux de données multimédia selon un mode de réalisation de l'invention ;

- la figure **7** illustre à l'aide d'une courbe de latence moyenne en fonction du temps l'étape de choix d'une représentation pour le segment en cours de livraison selon un mode de réalisation de l'invention ;

- la figure **8** présente de façon schématique un exemple d'adaptation en débit pour répondre à une contrainte de délai prédéterminée selon un mode de réalisation de l'invention ; et

- la figure **9** présente de façon schématique un exemple de structure simplifiée d'un dispositif d'émission d'une requête de livraison d'un flux de données multimédia selon l'invention.

## 7. Description d'un mode de réalisation particulier de l'invention

Le principe général de l'invention repose sur le découpage de segments de données disponibles auprès d'un équipement serveur en sous-segments de tailles déterminées par un équipement client au moins en fonction du nombre de liens d'accès au réseau de télécommunications dont il dispose, de la performance de chacun de ces liens par exemple en termes de latence et de bande passante et de la taille du flux de données à livrer.

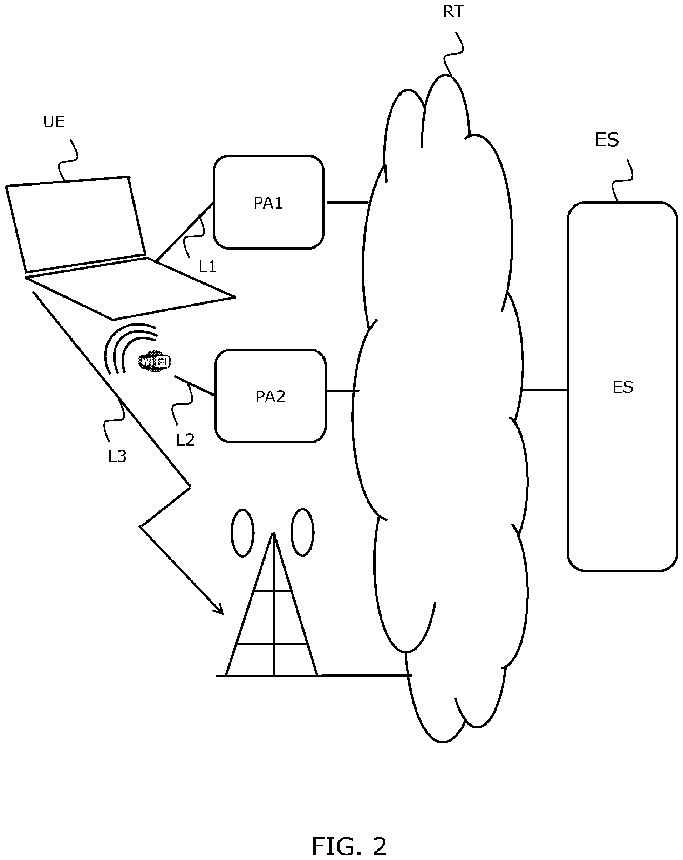

Un tel découpage permet de réduire la latence de transmission sur chaque lien et d'optimiser l'utilisation de la bande passante disponible sur les différents liens. En relation avec la Figure 2, on considère un exemple de contexte de mise en oeuvre de l'invention. En particulier on considère un équipement client UE, par exemple un ordinateur portable, une tablette ou un téléphone mobile intelligent (pour « smartphone », en anglais) connecté à un réseau de télécommunication RT, par une pluralité de liens d'accès. Dans cet exemple, l'équipement client UE dispose :

- d'un lien L1 d'accès filaire à un point d'accès PA1, de type passerelle domestique ou d'entreprise (pour « home gateway », en anglais) ;

- d'un lien L2 d'accès radio à un point d'accès PA2, de type Wifi selon la norme IEEE 802.11x ; et

- d'un lien L3 d'accès radio à un point d'accès PA3, par exemple une station de base (« node-B » pour 3G,« e-node B » pour 4G, en anglais) de type 3G, 4G ou d'une future génération de la norme 3GPP.

Par simplicité, on a représenté un seul réseau de télécommunications RT. Bien sûr, ce réseau peut être composé de plusieurs réseaux d'accès, selon les technologies d'accès qui viennent d'être citées à titre d'exemple, WAN (pour « Wide Access Network », en anglais) ou mobile au réseau IP (pour « Internet Protocol », en anglais).

Par l'intermédiaire de ces différents liens, l'équipement client UE peut se connecter à un équipement serveur ES, par exemple selon un mode client-serveur, une technologie Web et un protocole de communication de type http pour requérir la livraison d'un flux de données multimédia mis à disposition par l'équipement serveur.

Dans la suite de la description, on désigne par lien aussi bien un accès Li particulier au réseau de télécommunication RT dont dispose le terminal client que l'ensemble du chemin emprunté par les données échangées par le terminal client avec l'équipement serveur par l'intermédiaire de cet accès particulier.

Dans la suite on considère que l'équipement client UE et l'équipement serveur ES sont agencés pour mettre en oeuvre la technologie d'adaptive streaming selon la norme MPEG-DASH.

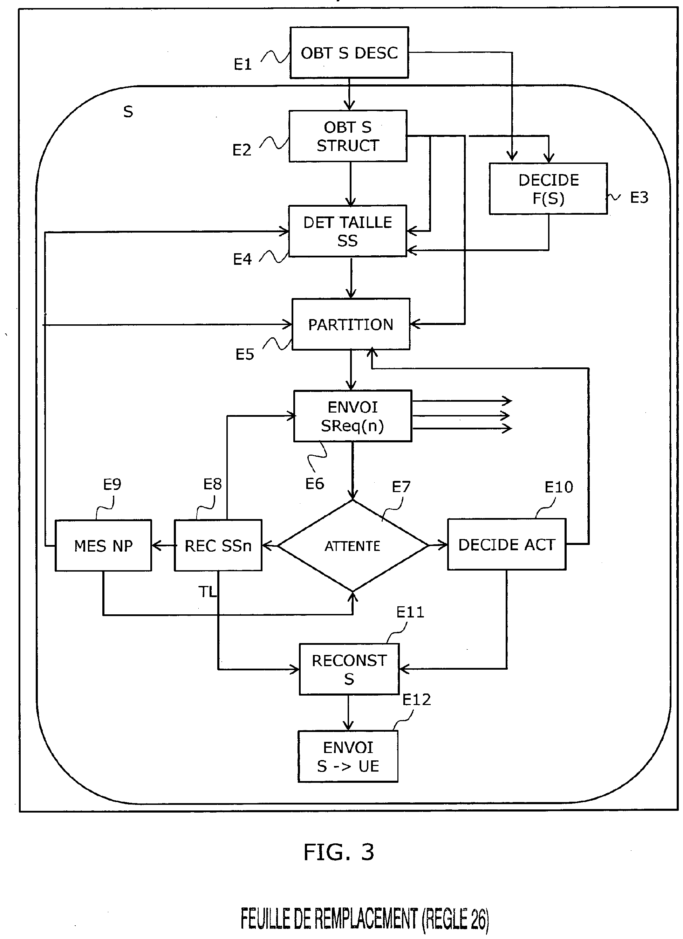

En relation avec la Figure **3,** on décrit maintenant les étapes d'un procédé de traitement d'une requête de livraison de données multimédia selon un mode de réalisation de l'invention. La requête de livraison de données a été émise par un équipement client UE à destination d'un équipement serveur ES. On considère que le procédé qui va être décrit peut être mis en oeuvre par un dispositif intégré à l'équipement client lui-même ou par un module proxy placé en coupure entre les liens L1, L2, L3 d'accès au réseau et l'équipement client. Le dispositif selon l'invention est donc agencé pour intercepter la requête et la traiter.

Au cours d'une étape E1, une requête de description des données à livrer, émise par l'équipement client et reçue par le dispositif selon l'invention, est transférée à l'équipement serveur ES. Par exemple, cette requête est de type « MPD request ». En réponse, un fichier de description de type MPD est obtenu. De façon connue, un tel fichier décrit les différents segments du flux de données multimédia qui sont disponibles au niveau de l'équipement serveur ES dans chacune des représentations possibles du même flux, correspondant chacune à un débit donné, donc à une qualité donnée. En particulier, pour un segment S d'une représentation donnée, le fichier de description comprend au moins la taille du segment et une information de localisation de ce segment, par exemple de type url pour accéder à l'intégralité de ce segment.

Avec l'invention, il est nécessaire d'accéder en outre à une information représentative du positionnement du sous-segment dans le flux de données (pour « byte range », en anglais), par exemple un indice d'octet de début de sous-segment et un indice de fin de sous-segment.

Or, dans le cadre d'un profil de type « on demand », la norme MPEG-DASH exploite un fichier de type ISO Base Media File Format ou ISOBMFF, comprenant une adresse @SIDX où requérir une description détaillée, appelée SSIX (pour « Sub Segment Index », en anglais), d'une structure codée du segment S pour une représentation F(S). Cette description détaillée associe à une information de positionnement, par exemple un index de début (en octets) et un index de fin, une information représentative d'une type d'information codée.

Ce profil a été prévu pour permettre à un client d'une application de vidéo à la demande (« Video on Demand », en anglais) de se déplacer dans un segment d'un flux de données et réaliser des fonctions de lecture rapide de type « avance rapide (pour «fast forward », en anglais). La mise en oeuvre de telles fonctions nécessite en effet de connaître la structure des données codées afin de repérer le positionnement des images de référence I et déclencher le saut d'une image I à une autre.

Au cours d'une étape E2, le dispositif selon l'invention requiert donc la description détaillée des différents SSIX associés à la représentation de qualité F(S) du segment S à l'adresse @SIDX obtenue.

Par exemple, dans le cas où le flux de données représente une séquence vidéo encodée, une telle description renseigne sur le type d'image codée dans le segment S et sur un groupe d'appartenance des données codées. Selon un schéma de codage de type MPEG par exemple, les images d'une séquence sont regroupées en GOP (pour « Group of Pictures », en anglais).

Selon un mode de réalisation de l'invention, il peut demander une seule description correspondant à une représentation F(S) particulière. Selon un autre mode, il demande plusieurs descriptions correspondant à plusieurs représentations.

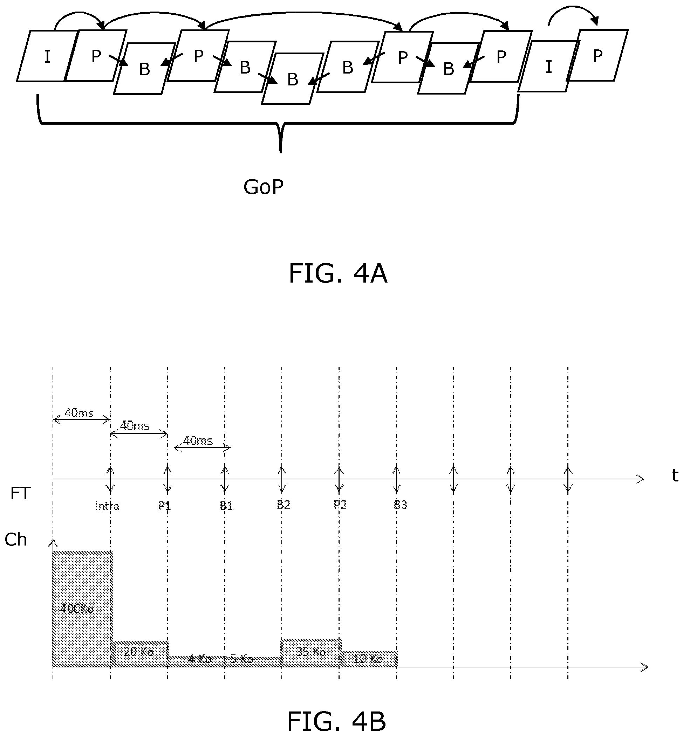

En relation avec la figure **4A,** on présente un exemple typique de structure de GOP comprenant des images de types différents : une image de référence, appelée image I, codée de façon indépendante des autres images, des images prédites de type P, codées par prédiction par rapport à l'image de référence I et des images bidirectionnelles de type B, codées par prédiction par rapport à deux images I, P ou B passées ou futures.

On comprend donc que la description SSIX associe un type d'image et un groupe d'appartenance à des informations de positionnement de données ou byte range dans le segment S pour une qualité de représentation F(S) donnée.

En relation avec la figure **4B,** on présente un exemple de charge Ch (frame load », en anglais) en termes de quantités de données codées par type FT d'image d'un GoP. Ceci illustre bien le fait qu'une image de référence I représente une charge beaucoup plus importante qu'une image P ou B et met en évidence la nécessité de profiter au mieux des ressources réseau disponibles pour optimiser la transmission des données de l'image I dont dépendent toutes les autres images du GoP.

Au cours d'une étape E4, on détermine une taille Ti de sous-segment par lien Li d'accès au réseau RT disponible au niveau de l'équipement client UE, avec i entier compris entre 1 et le nombre de liens, au moins en fonction du volume de données du segment à livrer dans la représentation choisie et du nombre de liens d'accès disponibles.

Un premier exemple de réalisation simple de cette étape est de diviser la taille du segment à livrer par le nombre de liens d'accès.

Avantageusement, cette étape E4 prend aussi en compte des paramètres représentatifs d'un état du canal de communication sur chacun des liens d'accès disponibles. Ces paramètres ont par exemple été mesurés préalablement au cours d'une précédente livraison d'un autre flux de données ou d'un segment précédent du même flux de données. Ils comprennent par exemple une mesure de temps de latence, une mesure de débit de transmission, une mesure d'un taux de perte de données ou encore une mesure de gigue, c'est-à-dire une mesure de retard de transmission entre deux paquets de données requis simultanément.

Ces paramètres renseignent sur une capacité du lien considéré à transmettre un sous-segment en termes de vitesse de téléchargement donc de délai, de fiabilité, de taux de perte, etc. On comprend que ces paramètres ont un impact sur la taille d'un sous-segment. Par exemple, pour un lien associé à un temps de latence élevé, on déterminera une petite taille de sous-segment.

Une taille de sous-segment adaptée à un type de lien prend en compte l'efficacité du lien, en termes de latence et du débit. La latence est classiquement déduite du RTT (pour « Round Trip Time », en anglais); l'efficacité d'un lien Li est par exemple représentée sous la forme d'un poids d'efficacité Epi, qui peut s'exprimer de la façon suivante :

$$Epi = 66.\frac{bpi}{\sum_{(1,n)} bpi} + 33.\frac{\min\left[RTT(L_{1,N})\right]}{min[RTT(Li)]}$$

Eq 1

dans lequel bpi désigne la bande passante mesurée sur le chemin correspondant au lien Li et RTT(Li) le « Round Trip Time du lien Li.

Selon cet exemple, on donne un poids trois fois plus important au débit qu'à la latence. La taille du sous-segment sera alors calculée selon un algorithme de répartition, par exemple :

$$Ti = TS \times [Ep/\Sigma Epi],$$

avec TS taille du segment.

Avantageusement, cette étape E4 exploite la connaissance de la structure des données du segment obtenue en E2. Par exemple, elle privilégie le fait de découper le segment en sous-segments comprenant des données d'un seul et même type, pour faciliter le traitement des sous-segments notamment dans leur phase de décodage. Il s'agit donc de trouver un compromis entre une taille de sous-segment qui satisfait les contraintes de transmission sur un lien et une taille qui minimise le nombre de segments « hybrides », c'est-à-dire regroupant des données d'au moins deux types différents.

A l'issue de l'étape E4, on a déterminé une taille Ti de sous segment adaptée à chaque lien d'accès Li au réseau RT.

Au cours d'une étape E5, on utilise les tailles de sous-segments déterminées pour découper le segment à livrer en sous-segments et répartir les sous-segments découpés sur les différents liens d'accès au réseau de télécommunications RT. Cette étape prend en compte un ordonnancement de sous-segments dans le segment à livrer. En effet, pour pouvoir décoder et jouer sans attendre le flux de données au fur et à mesure de la réception des sous-segments, il faut les recevoir dans l'ordre. Par conséquent, il convient de répartir les requêtes de sous-segments sur chaque lien de façon à recevoir les sous-segments conformément à leur ordonnancement initial dans le segment à livrer.

A ce stade, on comprend que les étapes de détermination de tailles de sous-segments, de découpage d'un segment en sous -segments de la ou des tailles déterminées et de répartition des sous-segments obtenus sur les liens Li sont étroitement imbriquées, en particulier quand on détermine une taille par lien et qu'on prend en compte la structure des données codées au cours de ces étapes.

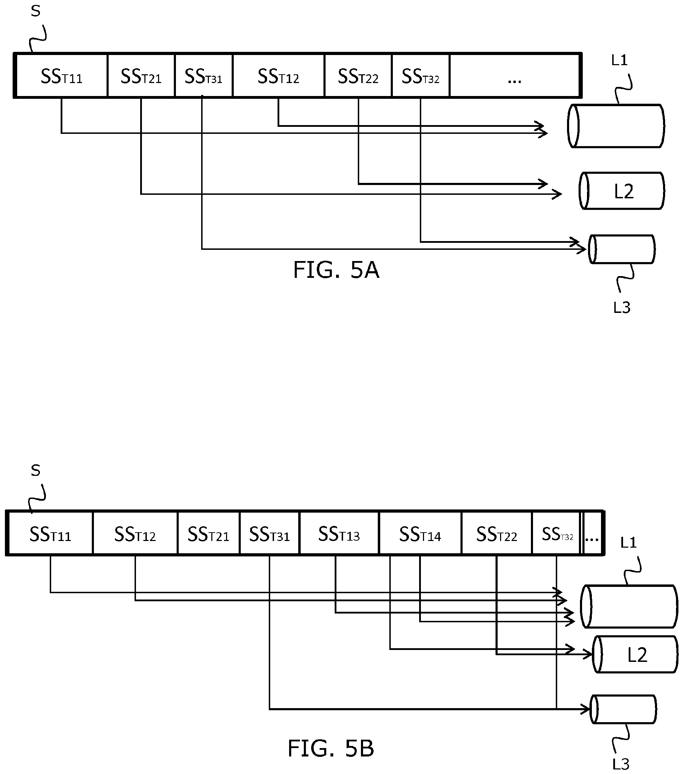

En relation avec les Figures **5A** et **5B**, on présente deux exemples de découpage d'un segment S en sous-segments de taille T1 déterminée pour le lien L1, T2 déterminée pour le lien L2, T3 déterminée pour le lien L3 et de répartition des sous-segments obtenus sur les trois liens disponibles L1, L2, L3.

Dans l'exemple de la Figure **5A**, on découpe le segment S selon une succession d'une séquence de répartition qui comprend un sous-segment SST1 de taille T1 que l'on va requêter sur le lien L1, un sous-segment SST2 de taille T2 à requêter sur le lien L2 et un sous-segment SST3 de taille T3 à requêter sur le lien L3.

Dans l'exemple de la Figure **5B**, les tailles T1, T2, T3 déterminées sont identiques, mais la séquence de répartition est choisie différemment : 2 sous-segments successifs de taille T1 sont attribués au lien L1, suivi d'un sous-segment de taille T2 attribué au lien L2 et d'un sous-segment de taille T3 attribué au lien L3.

Avantageusement, cette étape prend en compte d'une part la connaissance des paramètres représentatifs d'un état du canal de communication sur chacun des liens. En effet, ils sont indicatifs d'un niveau de fiabilité de chacun des liens, d'un débit, d'une bande passante etc. Autrement dit, on va demander plus de sous-segments à un lien, par exemple L1 qui dispose d'un débit plus élevé qu'à un lien, L2 ou L3 qui dispose d'un débit moins élevé.

Avantageusement, cette étape E5 prend aussi en compte la connaissance de la structure SSIX du segment S, obtenue en E2. Avantageusement, un niveau de priorité a été préalablement attribué à chaque type de donnée susceptible d'être inclus dans un segment et ce niveau de priorité est exploité pour décider de la répartition des segments sur les différents liens.

A titre d'exemple, on considère de nouveau le cas d'une séquence d'images organisée en GOP. On comprend que les images de référence de type I sont très importantes pour le décodage du GOP car elles servent de base au décodage des autres types d'images, dont seule l'erreur résiduelle par rapport à cette image de référence a été transmise dans le flux de données. Il est donc pertinent d'attribuer un niveau de priorité plus élevé aux images I qu'aux images P ou B. d'image susceptible d'être en termes de type d'image codée.

Avantageusement, l'étape E5 prend aussi en compte la connaissance de la structure des données codées pour découper un segment en sous-segments et répartir les requêtes de sous-segments sur les différents liens, par exemple en associant un niveau de priorité de décodage à un sous-segment en fonction du type de données qu'il contient.

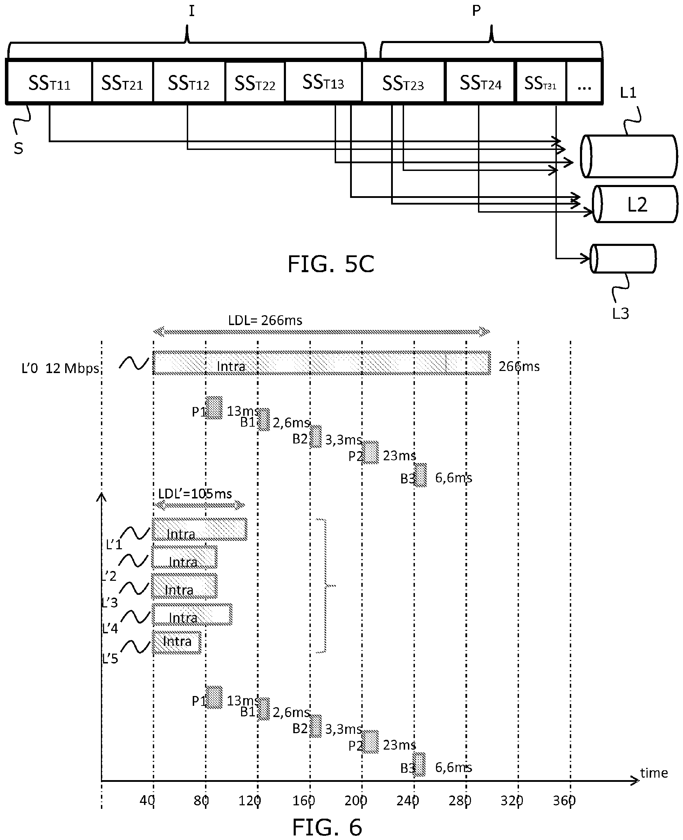

En relation avec la Figure **5C,** le segment S comprend d'abord des données de type I puis des données de type P. Supposons qu'on attribue un niveau de priorité 1 aux données de type I et un niveau de priorité 2 aux images de type P. L'étape E4 de répartition des sous-segments sur les liens L1, L2, L3 disponibles exploite avantageusement ce niveau de priorité et privilégie les liens L1 et L2 qui sont plus fiables pour requérir les sous-segments de type I. En revanche, il affecte les sous-segments de type P au lien L3 considéré comme moins fiable. Au cours d'une étape E6, des sous-requêtes SReq(SSn) de livraison des sous-segments SSn du segment S sont émises à destination de l'équipement serveur ES sur les différents liens d'accès au réseau RT, selon la répartition qui vient d'être déterminée.

A titre d'exemple, on considère un segment de temps de 1s composé d'une image Intra (I) de plusieurs centaines de Kilo octets (Ko) de données suivie de plusieurs images Prédites (P) de quelques dizaines de Ko et de plusieurs images bi directionnelles ou B de quelques Ko. Un niveau de priorité maximal est associé aux sous-segments SST11, SST22, SST12, SST22 et SST13 qui comprennent les données codées de cette image I. Ils sont donc répartis sur les liens L1, L2 les plus efficaces en termes de latence et de bande passante.

On comprend que cette première répartition des sous-segments de l'image I est importante car elle détermine la latence globale de la livraison du segment. En effet, les images P qui s'appuient sur l'image I décodée sont attendues par le décodeur de l'équipement client après l'arrivée de l'image Intra, on a donc un peu plus de temps pour les transmettre, par exemple en utilisant un lien radio mobile 3G ; tel que le lien L3, qui est moins efficace en termes de débit et de latence, mais qui, du fait de son débit constant, garantit la fiabilité des données transmises.

Quant aux images B, elles sont réparties sur les différents liens à la suite des sous-segments de l'image I. On notera que ces images sont moins importantes pour le décodage, car elles ne servent de référence à aucune autre image du GoP. Elles sont donc associées à un niveau de priorité faible. Une option peut être de les décoder lorsqu'elles sont transmises à l'équipement client avec une latence correcte et de les ignorer dans le cas contraire.

Au cours d'une étape E6, les sous-segments sont requêtés sur les différents liens. On considère d'abord que les sous-requêtes SReq concernent le premier segment du flux de données. Si la répartition déterminée correspond à l'exemple de la Figure **5A,** une sous-requête de livraison du premier sous-segment SST1 est émise sur le lien L1, une sous-requête de livraison du deuxième sous-segment SST2 est émise sur le lien L2, une sous requête de livraison du deuxième sous-segment SST3 est émise sur le lien L3.

Avantageusement, ces sous-requêtes sont émises simultanément sur les trois liens de façon à optimiser l'utilisation des ressources de transmission disponibles.

Si la répartition déterminée correspond à l'exemple de la Figure **5B,** une même sous-requête de livraison émise sur le lien L1 peut avantageusement concerner plusieurs sous-segments, tels que par exemple le premier et le deuxième sous-segment $SS_{T11}$, $SS_{T12}$.

Dès qu'il a émis des sous-requêtes, le procédé se met en E7 en attente des réponses de l'équipement serveur ES.

En E8, il reçoit les premières réponses Resp(SSn) de l'équipement serveur.

Le processus est ensuite répété pour la séquence de sous-segments suivante.

En E6, l'émission des sous-requêtes de livraison de sous-segments du segment S peut être gérée de différentes manières. Selon un premier aspect, une première salve de sous-requêtes est émise simultanément sur les différents liens, à raison d'une sous-requête par lien. On attend ensuite la réception des sous-segments requis avant de déclencher l'émission de nouvelles sous-requêtes. Ce mode de gestion correspond à un mode classique.

Avantageusement, un mode d'émission de type « rafale » (appelé aussi pipelining http) peut être mis en oeuvre, qui consiste à émettre à la suite sur un même lien une série de requêtes de sous-segments, une requête suivante étant émise avant d'avoir reçu la réponse de la requête précédente. Dans un contexte de réception temps réel, ce mode de gestion, du fait qu'il sollicite au maximum les ressources de transmission et de traitement de l'équipement serveur, permet d'optimiser le temps de transmission.

Par exemple, on pourrait envisager d'émettre en rafale toutes les sous-requêtes de sous-segments affectés à un lien lors de l'étape de répartition, ce mode peut néanmoins n'être enclenché que si la tenue du temps réel commence à poser problème par exemple dans le cas d'une image Intra « lourde » qui constitue un gros fichier de données et qui malgré le petit buffer du décodeur (par exemple 40ms de buffer) risque de décaler l'arrivée des autres images et faire perdre l'horloge du live, et dans ce cas accélérer le téléchargement des images suivantes grâce à ce mode rafale prend tout son sens.

A contrario quand tout se déroule de façon quasi synchrone, un mode séquentiel peut s'avérer suffisant.

Quel que soit le mode d'émission de sous-requêtes mis en oeuvre, le procédé déclenche, suite à l'émission d'une ou plusieurs sous-requêtes sur un lien, une étape E9 de mesure d'un temps de latence TL entre l'émission d'une sous-requête et la réception d'une réponse à la sous-requête sur le lien. Plus généralement cette étape E9 mesure d'autres paramètres représentatifs de l'état du réseau sur les liens L1, L2, L3 et met à jour les paramètres précédemment utilisés notamment pour déterminer une taille de sous-segment adaptée à chaque lien. On comprend que ces nouvelles mesures sont particulièrement instructives puisqu'elles concernent la transmission de sous-segments dont la taille a été déterminée pour être la plus adaptée possible aux conditions de transmission sur un lien. Elles permettent de vérifier qu'elle est bien optimale et que la contrainte de délai CD est bien respectée.

Avantageusement, le procédé comprend une étape E3 de choix d'une représentation pour le segment en cours de livraison. Cette étape exploite les mesures de paramètres réseau effectuées en E9, en particulier la mesure du temps de latence TL. Au début, le terminal client a requis le segment S dans une représentation particulière. Ensuite, si la contrainte de délai CD n'est pas respectée, ou si au contraire les conditions réseau sont favorables, l'étape E3 permet de décider de changer de représentation avant la fin de la livraison du segment en cours. Si la contrainte est dépassée, elle choisira une représentation de débit inférieur, donc moins coûteuse en bande passante. Au contraire, si le temps de latence mesuré est inférieur à la contrainte, elle choisit de passer à une représentation de débit supérieur pour optimiser la qualité des données livrées.

L'invention permet donc de s'adapter à l'évolution des conditions réseaux avec une granularité plus fine que le segment.

Bien sûr, on comprend qu'il n'est pas toujours opportun de décider de changer de représentation n'importe où dans un même GoP. En particulier, il convient de prendre en considération les informations d'appartenance à un groupe et de type de données obtenues au cours de l'étape E2. En effet, les sous-segments correspondants à une image P ou B qui dépendent d'une image I de référence doivent être extraits de la même représentation que les sous-segments correspondant à cette image I, afin que le décodage soit possible au niveau de l'équipement client.

On comprend qu'il sera possible de changer de représentation à partir de l'image I suivante. L'invention permet donc de suivre la contrainte de délai avec une granularité d'intra à intra.

Avantageusement, le procédé réitère ensuite l'étape E4 de détermination d'une taille d'un sous-segment par lien à partir des nouvelles mesures de paramètres réseau et l'étape E5 de découpage du segment et de répartition des sous-segments sur les liens, en fonction des nouvelles mesures de paramètres réseau et des tailles de sous-segments mises à jour.

De cette manière, on fait évoluer la structure des sous-requêtes en temps réel pour s'adapter aux conditions réelles de transmission sur les différents liens.

Bien sûr, en fonction de la taille d'un segment, il est envisageable d'appliquer les mises à jour calculées au segment suivant, ce qui semble constituer un bon compromis entre complexité et adaptabilité. De cette manière, la structure et la répartition des sous-requêtes pour un segment courant s'appuient sur les mesures faites au cours de la livraison du segment précédent.

Pour minimiser le délai global de la transmission de segments de données, le procédé selon l'invention propose de piloter la qualité maximale des segments livrés pour une consigne de latence prédéterminée. Par exemple on fixe un retard au live de 70ms, et le procédé calcule les temps de téléchargements correspondants pour chacun des niveaux d'encodage disponible (adaptive bitrate) et choisit la représentation la plus optimale.

Lorsque le temps de latence TL mesuré pour une sous-requête dépasse un seuil prédéterminé, par exemple 70ms (qui comprend le RTT c'est-à-dire le délai entre la transmission d'une requête montante http et la réception en retour du premier bit de données auquel on ajoute le temps de téléchargement. Par exemple sur un réseau avec un RTT de 30ms, il reste 40ms pour télécharger les données), alors qu'aucune réponse à une sous-requête n'a été reçue, une étape E10 est mise en oeuvre au cours de laquelle il est décidé d'une action à entreprendre pour remédier à ce problème. Plusieurs actions peuvent être décidées.

Cette étape de décision peut avantageusement prendre en compte la connaissance de la structure du segment obtenue au cours de l'étape E2 et en particulier le niveau de priorité qui a été associé au(x) sous-segments non reçus. Ce niveau de priorité est une information précieuse pour décider si la réception de ce sous-segment est importante pour le décodage du flux de données ou bien si au contraire, on peut s'en passer, moyennant une qualité d'image localement et temporairement dégradée.

Si la réception de ce sous-segment est jugée importante, par exemple parce qu'il est associé à un niveau de priorité élevé, il peut être décidé de renouveler l'émission de la sous-requête sur un autre lien, plus fiable. On comprend que, du fait de la contrainte temps réel associée à la livraison du segment du flux de données, il n'est pas possible d'attendre la livraison sur le lien défaillant au-delà d'un délai prédéterminé.

Si la réception de ce sous-segment n'est pas jugée indispensable, une décision peut être de ne rien faire et de décoder le segment sans le sous-segment manquant.

A ce stade, on considère un mode de réalisation particulier de l'invention selon lequel l'équipement client est un client MPEG-DASH et le mode de communication mis en oeuvre entre l'équipement client UE et l'équipement serveur ES est conforme aux protocoles HTTP (pour « Hypertext Transfer Protocol », en anglais) sur TCP (pour « Transmission Control Protocol », en anglais). Selon ce dernier protocole, l'équipement client et l'équipement serveur établissent préalablement une session de communication au cours de laquelle l'équipement client peut émettre une requête de livraison à l'équipement serveur. Une fois qu'il a reçu la réponse à sa requête l'équipement client en accuse réception à l'équipement serveur. Tant qu'il n'a pas reçu d'accusé-réception de l'équipement client, l'équipement serveur réémet régulièrement la réponse à la requête de l'équipement client. On comprend que ce protocole garantit la communication des données entre les deux équipements, mais qu'en cas de problème de transmission, le mécanisme de réémission engendre du trafic et de la latence sur le lien qui est peu compatible avec des problématiques temps-réel.

Dans ce contexte, l'étape E10 peut avantageusement décider d'annuler une sous-requête http qui ne reçoit pas de réponse sur un lien dans le temps imposé. Dans l'exemple de réalisation précédent, cette action d'annulation est intéressante pour les images, donc les sous segments non prioritaires. Elle comprend la fermeture de la session en cours avec l'équipement serveur sur le lien concerné. L'intérêt de cette annulation est de mettre fin au trafic et à la signalisation par exemple selon le protocole TCP générés entre l'équipement client et l'équipement serveur, qui occupent les ressources de ces deux équipements.

Selon une variante, plutôt que d'annuler la sous-requête en cours, il peut être décidé d'émettre systématiquement un accusé-réception de la réponse même non reçue. L'effet produit côté équipement serveur sera le même que précédemment, à savoir la fermeture de la session en cours.

On comprend qu'il peut être décidé de mener plusieurs actions simultanément, par exemple d'annuler une sous-requête en cours sur un lien, pour mettre fin au trafic que son traitement génère et de renouveler l'émission de cette sous-requête sur un autre lien, considéré comme plus fiable, pour limiter le retard pris sur la réception du segment complet.

En E11, le segment est reconstruit à partir des sous-segments reçus puis transmis en E12 à l'équipement client UE, en réponse à sa requête initiale

Les étapes du procédé sont ensuite répétées pour le segment suivant du flux de données.

En relation avec la Figure **6,** on considère, à titre d'exemple le cas d'un premier équipement client disposant d'un accès filaire L0 au réseau RT avec un débit de 12 Mb/s. La première image I a besoin de 266 ms pour être livrée. Le délai de latence au temps réel LDL est de 266 ms. Les autres images sont de petite taille et sont transmises en moins de 30 ms. Il n'est pas efficace de les sous-segmenter davantage.

On considère ensuite le cas d'un deuxième équipement client disposant de 4 accès filaires L'1, à L'4 de type ADSL (pour « Asymmetric Digital Subscriber Line », en anglais) et d'un accès mobile 4G L'5, et mettant en oeuvre le procédé selon l'invention. L'image I correspond à un volume de données de 400 Ko. Elle est découpée en 5 sous-segments de tailles variables destinés à être requêtés sur chacun des 5 liens, en fonction de l'efficacité Epi de chaque lien, qui peut, à titre d'exemple, être calculée à partir de l'une des équations suivantes :

- dans le cas où les liens d'accès sont très proches en termes de latence mais présentent des écarts de débits :

$$Epi = 66.\frac{bpi}{\sum_{(1,n)} bpi} + 33.\frac{\min[RTTp(1,n)]}{\min[RTT(pi)]} \text{ (Eq 1)}$$

- dans le cas où les liens d'accès sont très hétérogènes en termes de latence :

$$Epi = 66.\frac{bpi}{\sum_{(1,n)} bpi} + 33.\frac{(1 - RTT(pi)/\sum(1,n)RTT(pi))}{(p-1)} \text{ (Eq 2)}$$

La taille d'un sous-segment adaptée au lien L'i est calculée de la façon suivante, en fonction de l'efficacité Epi du lien L'i :

$$T'i = TF.\frac{Epi}{\sum_{(1,n)} Epi} \text{ (Eq. 3)}$$

avec $T_F$ taille de l'image courante à télécharger dans le segment S.

De cette manière, on répartit le téléchargement d'une image TF sur les différents liens L'i disponibles en fonction de leurs efficacités respectives.

Ainsi le sous-segment de données correspondant à une image Intra complète sera téléchargé en parallèle sur les liens d'efficacité différente en termes de débit et de latence :

- pour le lien L'1 disposant d'un débit égal à 14Mbps, d'un RTT égal à 21ms et d'une efficacité $Ep = 66 \times 14/72 + 33 \times [(145-21)/145]/4= 20$, on détermine une taille de sous-segment égale à 80Ko ;
- pour le lien L'2 disposant d'un débit égal à 11Mbps, d'un RTT égal à 27ms et d'une efficacité égale à $Ep = 66 \times 11/72 + 33 \times [(145-27)/145]/4 = 17$, on détermine une taille de sous-segment égale à 68Ko ;
- pour le lien L'3 disposant d'un débit égal à 5 Mbps d'un RTT égal à 31ms et d'une efficacité $Ep = 66 \times 5/72 + 33 \times [(145-31)1145]/4 = 11$, *l*a taille de sous-segment déterminée est de 44Ko ;
- pour le lien L'4 disposant d'un débit égal à 7Mbps, d'un RTT égal à 36ms, d'une efficacité égale à $Ep = 66 \times 7/72 + 33 \times [(145-36)1145]/4 = 13$, on détermine une taille de sous-segment égale à 52Ko ;
- pour le lien L'5 disposant d'un débit égale à 35Mbps, d'un RTT égal à 30ms) et d'une efficacité égale à $Ep = 66 \times 35/72\ 33 \times [(145-30)/145]/4 = 39$, on détermine une taille de sous-segment égale à 156Ko.

On comprend qu'avec l'invention chaque lien a une contribution en termes de volume de données livrées à la livraison des données correspondant à ses performances en temps de téléchargement mesurées à partir des paramètres réseau.

Les temps de téléchargements des différents sous-segments sur les différents liens seront fonction de la nature du lien (latence et bande passante)

De façon expérimentale pour les 5 liens donnés dans l'exemple, on obtient pour L'1 un temps de téléchargement de 68ms, pour le lien L'2 un temps de 74ms, pour L'3 un temps de 105ms, pour L'4 un temps de 89ms et pour L'5 un temps de 54ms.

Le plus gros sous-segment est livré en 105 ms. Il en résulte que le délai de latence au temps réel LDL' est réduit à 105 ms.

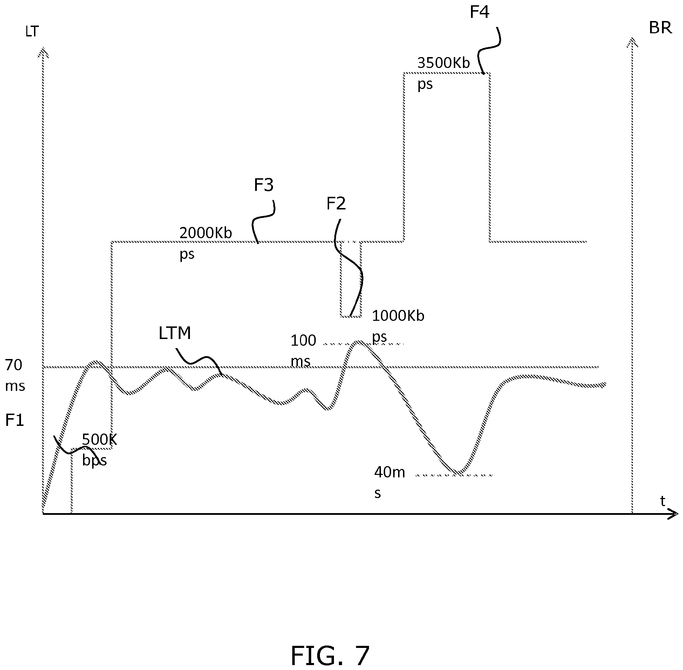

Dans l'exemple considéré en relation avec la Figure **7,** on considère un autre exemple selon lequel l'équipement serveur ES met à disposition 4 représentations ou flux des données pour un même contenu :

- un flux F1 encodé à 500kbps ;
- un flux F2 encodé à 1000 kbps ;
- un flux F3 encodé à 2000 kbps ; et
- un flux F4 encodé à 3500 kbps.

On a représenté sur la même figure une courbe LTM de la latence moyenne des différents liens réseau en fonction du temps et une représentation en marches d'escalier des qualités de représentations choisies par le dispositif selon l'invention au cours du temps.

Pour satisfaire une contrainte de délai CD prédéterminée, dans cet exemple égale à 70 ms, le procédé selon l'invention choisit, au cours d'une étape E3, une représentation à un débit BR parmi celles disponibles (F1 à F4), par exemple F1 à 500 Kbps ; pour requérir les premiers sous-segments. Ce choix prend en compte non seulement la contrainte de délai CD, mais aussi les conditions réseaux. Dans cet exemple, on voit que l'on démarre la lecture de données codées à la qualité F1, la plus basse disponible, qui permet d'amorcer la lecture en assurant la consigne de délai. Pour le GoP suivant on bascule sur la qualité F3 de qualité supérieure, qui respecte la consigne. Ce régime perdure pendant la transmission de plusieurs GoPs jusqu'à l'apparition de problème réseau, et en réaction à une latence moyenne qui augmente, on redescend à la qualité F2. Ensuite, compte tenu du fait que la latence moyenne mesurée baisse, on bascule vers une représentation de qualité supérieure F4.

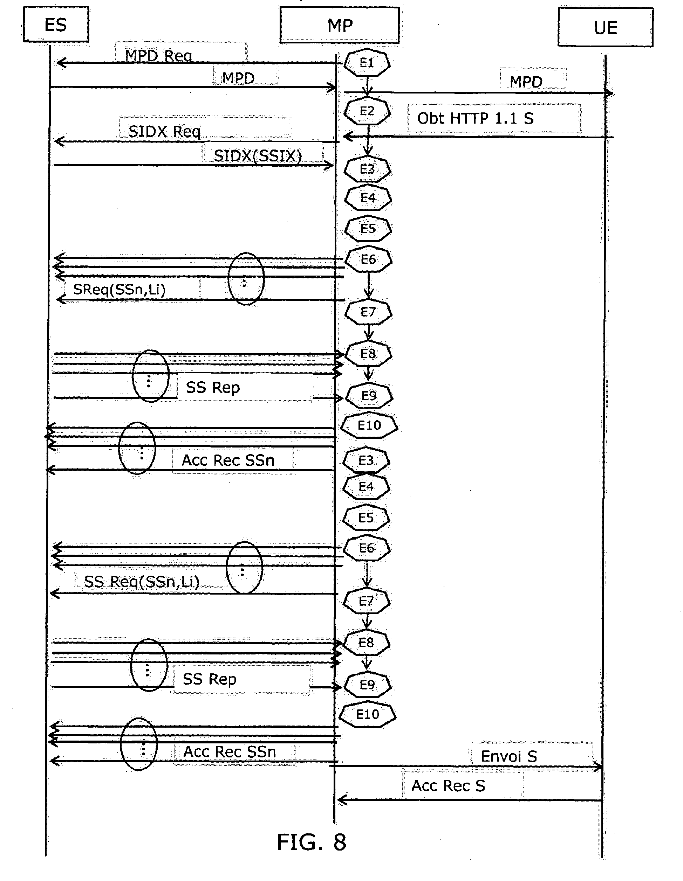

En relation avec la Figure **8,** on présente maintenant un diagramme des flux échangés entre un équipement client UE, un module proxy MP et un équipement serveur ES selon un exemple de réalisation de l'invention. Dans cet exemple le module MP, placé en amont de l'équipement client UE, met en oeuvre le procédé de traitement d'un requête de livraison d'un flux de données selon l'invention qui vient d'être décrite en relation avec la Figure **3**. Ce module a accès aux différents liens L1, L2, L3, dont dispose l'équipement client. Dans cet exemple, l'équipement client UE est conforme à la norme MPEG-DASH et son fonctionnement n'est pas impacté par l'invention.

De façon connue, l'équipement client UE émet une requête « MPD Request » de description d'un flux de données FD à l'équipement serveur ES sur un de ses liens L1, L2 ou L3 d'accès au réseau RT. En E1, cette requête est relayée de façon transparente par le module proxy MP et transmise à l'équipement serveur ES

L'équipement serveur ES répond en transmettant le fichier de description MPD correspondant.

De façon connue, le terminal client UE requiert la livraison d'un segment S du flux de données au serveur ES en émettant une requête de type http Req(S) sur le même lien Li que précédemment.

Cette requête est interceptée par le module proxy MP, qui émet en E2 une requête « SIDX Req » de description du segment S au serveur ES sur un des liens disponibles, par exemple le lien Li choisi par le client UE.

En réponse, le serveur ES lui transmet le fichier de description SIDX(SSIX) du segment S.

En E3, le module proxy peut choisir une représentation pour requérir le segment S. Au début, il choisit généralement celle qu'a requis le terminal client.

A partir des informations contenues dans ce fichier, concernant la structure des données multimédia codées dans le segment S pour chacune des représentations et la connaissance de paramètres représentatifs d'un état du réseau sur les liens disponibles, le module proxy détermine en E4 une taille de sous-segment adaptée à chaque lien Li.

Ensuite, en E5, le module proxy MP découpe le segment S en sous-segments de tailles déterminées et les répartit sur les différents liens.

En E6, il émet des premières sous-requêtes S-Req(SSn, Li) sur les différents liens.

En E7, il se met en attente de réception des premières réponses.

Le serveur ES, sur réception des sous-requêtes SReq(SSn, Li) émet des réponses comprenant les sous-segments SSn demandés sur les liens Li concernés. Ensuite, il se met en attente d'un accusé réception de la part du client UE.

En E8, le module MP reçoit les premières réponses S-Rep(SSn, Li), les stocke en mémoire, par exemple dans un tampon (buffer).

A réception des premières réponses, il met à jour en E9 les mesures de paramètres réseaux, en particulier de temps de latence TL des liens concernés.

Avantageusement, les étapes E3, E4 et E5 sont répétées pour prendre en compte les nouvelles mesures de paramètres réseau et optimiser le choix de la représentation, les tailles de sous-segments et la répartition des sous-segments sur chaque lien.

De façon avantageuse, les sous-segments correspondants à une image Intra prioritaire sont demandés plusieurs fois sur différents liens mesurés comme très efficaces. Selon une telle option, le module proxy ne prend en compte côté proxy que les sous-segments arrivés les premiers. Un avantage est d'éviter des retransmissions qui pourraient ne plus être réalisables dans la consigne de temps prédéterminée.

Si au-delà d'un temps de latence prédéterminé, des sous-segments n'ont pas été reçus, le module proxy décide en E10 d'une action à déclencher pour y remédier, par exemple requérir le sous-segment sur un autre lien, annuler la requête en cours etc.

L'étape de requête E6 est itérée pour requérir les sous-segments suivants. Comme décrit précédemment, différentes stratégies peuvent être mises en place. Par exemple, le module proxy MP attend d'avoir reçu les sous-segments précédents sur les différents liens pour requérir les suivants, ce qui permet de prendre en compte les nouvelles mesures de paramètres réseau et ainsi optimiser l'exploitation des ressources des différents liens. Une variante est de requérir les sous-segments affectés à un lien donné en mode rafale, sans attendre la réception des premiers sous-segments. Un avantage est de réduire au maximum la latence sur ce lien. En revanche, l'optimisation de la répartition ne pourra être mise en oeuvre que pour le prochain segment.

Une fois qu'il a reçu tous les sous-segments possibles du segment S, le module MP reconstruit le sous-segment en E11 et le transmet au client UE en E12 sous la forme d'une réponse http Rep(S) conforme à la norme MPEG-DASH.

Selon le protocole de communication utilisé, le terminal client UE peut accuser réception du segment S requis. Dans ce cas, le module proxy MP ne retransmet pas le message d'accusé-réception au serveur ES.

On comprend que selon ce mode de réalisation, le client UE peut continuer à fonctionner de façon normative, tout en bénéficiant d'une livraison optimisée, qui exploite tous les liens dont il dispose pour accéder au réseau de télécommunications.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

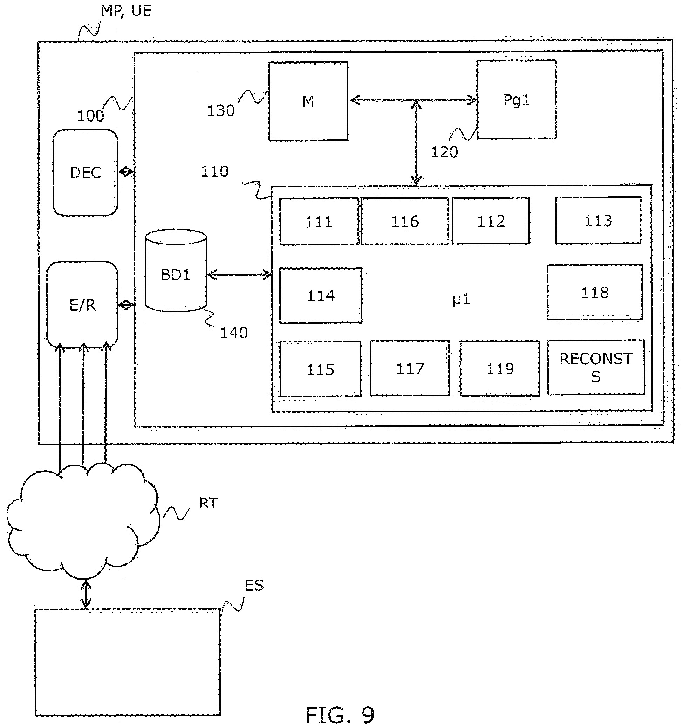

En relation avec la figure **9,** on présente maintenant un exemple de structure simplifiée d'un dispositif 100 d'émission d'une requête de livraison d'un flux de données multimédia selon l'invention. Le dispositif 100 met en oeuvre le procédé d'émission selon l'invention qui vient d'être décrit en relation avec la Figure **3.**

Par exemple, le dispositif 100 comprend une unité de traitement 110, équipée d'un processeur $\mu 1$, et pilotée par un programme d'ordinateur Pg1 120, stocké dans une mémoire 130 et mettant en oeuvre le procédé de selon l'invention.

A l'initialisation, les instructions de code du programme d'ordinateur Pgi 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans cet exemple de réalisation de l'invention, le dispositif 100 comprend au moins une unité 111 d'obtention d'un fichier de description du flux de données, une unité 112 de détermination d'une taille de sous-segment pas lien d'accès au réseau RT, une unité 113 de partitionnement d'un segment S en sous-segments en fonction des tailles déterminées, une unité 114 d'émission d'une sous-requête d'un sous-segment sur un lien Li et une unité 115 de réception du sous-segment SSn requis.

Avantageusement, le dispositif 100 comprend en outre une unité 117 d'obtention d'une structure des données du segment S, une unité 118 de mesures de paramètres d'état du réseau sur les liens L1, L2, L3, une unité 119 de choix d'une représentation du segment S, une unité 120 de décision d'une action à déclencher, lorsque le sous-segment n'a pas été reçu à l'issue d'un temps de latence prédéterminé Et une unité RECONST S de reconstruction du segment S une fois que tous les sous-segments ont été reçus.

Le dispositif 100 comprend en outre une unité BD1 de stockage des sous-segments reçus. Il s'agit par exemple d'un petit buffer permettant d'une part d'attendre la complétude d'une image qui arrive et d'autre part de disposer d'un léger temps tampon pour assurer le cadencement du décodage. Dans la mise en oeuvre du procédé, 40ms suffisent qui peuvent donc induire un délai de 0 à 40ms. Un point important concerne la réception des sous-segments par un dispositif 100 intégré au proxy décrit ci-dessus, il prend soin d'ordonner les sous-segments pour les transmettre au client DASH mais ne reconstitue pas l'image complète avant de la transmettre au client, ce qui inévitablement augmenterait le délai global.

Ces unités sont pilotées par le processeur $\mu$1 de l'unité de traitement 110.

De façon avantageuse, un tel dispositif 100 peut être intégré à un terminal client UE ou à un module proxy MP placé en amont d'un équipement client selon l'art antérieur. Un avantage d'un tel module proxy est qu'il permet de mettre en oeuvre l'invention depuis un équipement client déjà sur le marché, sans qu'il soit nécessaire de modifier le fonctionnement de l'équipement client. Le dispositif 100 est alors agencé pour coopérer au moins avec les modules suivants du terminal UE ou du module proxy MP :

- un module E/R d'émission/réception de données, par l'intermédiaire les requêtes sont transmises dans le réseau de télécommunications RT à destination de l'équipement serveur ES, par exemple des différents liens L1, L2, L3 d'accès disponibles au niveau de l'équipement client UE, par exemple un réseau d'accès filaire de type WAN ou un réseau d'accès sans fil de type Wifi ou encore un réseau mobile de type 3G, 4G ou une future génération de norme 3GPP ;
- un module DEC de décodage des données codées contenues dans les sous-segments reçus par l'équipement client UE ou le module proxy MP.

L'invention qui vient d'être présentée trouve de nombreuses applications impliquant la livraison de données, par exemple multimédia, avec des contraintes de délai, jusqu'au temps réel. En effet, côté client, le procédé de traitement d'une requête de livraison selon l'invention est capable d'organiser la livraison des données en optimisant le débit et les ressources réseaux disponibles tout en respectant une consigne de « délai au live ». A titre d'exemple, il pourrait être exploité pour mettre en oeuvre un service vote en ligne (pour « video-voting », en anglais), de jeu en réseau (pour « cloud gaming », en anglais ou encore de visio conférence.

## Revendications

1. Procédé de traitement d'une requête de livraison de données émise par un terminal client à destination d'un équipement serveur distant par l'intermédiaire d'un réseau de télécommunications, ledit terminal étant adapté pour accéder audit réseau par au moins deux liens selon des types d'accès distincts, lesdites données ayant été encodées en au moins un flux à au moins un débit prédéterminé, ledit flux ayant été préalablement découpé en une pluralité de segments, ledit procédé comprenant les étapes suivantes, mises en oeuvre pour un segment dudit au moins un flux de données :

   - Détermination (E4) d'au moins une taille de sous-segment au moins en fonction du nombre de liens et d'une taille du flux de données à livrer;
   - Calcul (E5) d'un partitionnement du segment en sous-segments en fonction de ladite au moins une taille déterminée et d'une répartition des sous-segments sur la pluralité de liens au moins en fonction d'un ordonnancement des sous-segments dans le partitionnement calculé et d'une contrainte de délai prédéterminée ;
   - Emission (E6) d'une pluralité de requêtes de transmission des sous-segments au serveur sur la pluralité de liens, au moins en fonction de la répartition calculée, une requête de transmission d'un sous-segment sur un lien comprenant au moins un identifiant du segment, un index de début de sous-segment et un index de fin de sous-segment.

2. Procédé de traitement d'une requête de livraison de données selon la revendication **1, caractérisé en ce qu'**il comprend une étape (E9) de mesure de paramètres représentatifs d'un état du réseau sur la pluralité de liens, mise en oeuvre sur réception de sous-segments en provenance du serveur sur lesdits liens en réponse aux requêtes émises et une étape de mise à jour des étapes de détermination d'une taille de sous-segment par lien et de calcul d'un partitionnement et d'une répartition des sous-segments sur les liens en fonction des paramètres mesurés.

3. Procédé de traitement d'une requête de livraison de données selon la revendication **2, caractérisé en ce qu'**il comprend une étape de détermination d'une fréquence de transmission des requêtes sur un lien en fonction des paramètres réseau mesurés et **en ce que** les requêtes de transmission des sous-segments sur ledit lien sont émises aux fréquences de transmission déterminées.

4. Procédé de traitement d'une requête de livraison de données selon l'une des revendications précédentes, **caractérisé en ce qu'**il comprend une étape (E2) d'obtention d'une structure de codage comprenant au moins une information représentative d'un type de données codées dans le segment associée à une information de position des données de ce type, une étape d'affectation d'un niveau de priorité de décodage aux sous-segments d'un segment en fonction de l'information de type et de règles prédéterminées, et **en ce que** l'étape de partitionnement du segment en sous-segments et l'étape de répartition des sous-segments sur la pluralité de liens prennent en outre en compte les niveaux de priorités de décodage affectés aux sous-segments.

5. Procédé de traitement d'une requête de livraison de données selon la revendication **4, caractérisé en ce que** l'information représentative d'un type de données est obtenue en émettant une requête de description du segment à l'équipement serveur et en recevant un fichier de description d'une structure de codage du segment comprenant ladite information.

6. Procédé de traitement d'une requête de livraison de données selon l'une des revendications **4** et **5, caractérisé en ce que** l'étape de mesure de paramètres réseau comprend la mesure d'un temps de latence (TL) entre l'émission d'une requête de transmission (SReq) d'au moins un sous-segment sur un lien et la réception du sous segment requêté et **en ce que**, ledit procédé comprend, en cas de temps de latence mesuré supérieur à un seuil prédéterminé pour ladite requête, une étape (E10) de décision de déclenchement d'une action au moins en fonction d'un niveau de priorité de décodage affecté au sous-segment requêté, ladite action appartenant à un groupe comprenant au moins :

   - Retransmission d'une nouvelle requête de transmission du même sous-segment sur un autre lien ;
   - Annulation de la requête en cours.

7. Procédé de traitement d'une requête de livraison de données selon la revendication **6, caractérisé en ce que**, le terminal client (UE) et l'équipement serveur (ES) étant agencés pour communiquer selon un protocole de communication avec échange d'accusé-réception, **caractérisé en ce que** lorsque l'action décidée est une annulation de la requête en cours, le procédé comprend une étape de transmission d'un message d'accusé-réception au serveur.

8. Procédé de traitement d'une requête de livraison de données selon l'une des revendications **5** à **7, caractérisé en ce que** le fichier de description (SSIX) reçu comprend en outre une information représentative d'un groupe d'appartenance des données et **en ce qu'**au moins un premier flux de données encodées étant disponible à un premier débit et un deuxième flux à un deuxième débit, le procédé comprend une étape de choix d'un flux dans lequel requérir un sous-segment du segment courant, au moins en fonction des paramètres réseau mesurés, du niveau de priorité de décodage du sous-segment du groupe d'appartenance des données du sous-segment et de la contrainte de délai prédéterminée (CD).

9. Dispositif (100) de traitement d'une requête de livraison de données émise par un terminal client (UE) à destination d'un équipement serveur (ES) distant par l'intermédiaire d'un réseau de télécommunications (RT), ledit terminal étant adapté pour accéder audit réseau par au moins deux liens selon des types d'accès distincts, lesdites données ayant été encodées en au moins un flux à au moins un débit prédéterminé, ledit flux ayant été préalablement découpé en une pluralité de segments, ledit dispositif comprenant les unités suivantes, mises en oeuvre pour un segment (S) dudit au moins un flux de données :

   - Détermination (112) d'au moins une taille de sous-segment au moins en fonction du nombre de liens et d'une taille du flux de données à livrer;
   - Calcul (113) d'un partitionnement du segment (S) en sous-segments en fonction de ladite au moins une taille déterminée et d'une répartition des sous-segments sur la pluralité de liens au moins en fonction d'un ordonnancement des sous-segments dans le partitionnement calculé et d'une contrainte de délai prédéterminée (CD); et

- Emission (114) d'une pluralité de requêtes de transmission du sous-segment au serveur sur la pluralité de liens, au moins en fonction de la répartition calculée, une requête de transmission d'un sous-segment sur un lien comprenant au moins un identifiant du segment, un index de début de sous-segment et un index de fin de sous-segment.

10. Terminal client (UE) adapté pour accéder à un réseau de communication par au moins deux liens selon des types d'accès distincts, **caractérisé en ce qu'**il comprend un dispositif de traitement d'une requête de livraison émise par le terminal client à destination d'un équipement serveur connecté audit réseau selon la revendication **9.**

11. Module Proxy (MP) agencé en coupure d'un terminal client (UE) et d'au moins deux liens selon des types d'accès distincts pour accéder à un réseau de communication (RT), **caractérisé en ce qu'**il comprend un dispositif (100) de traitement d'une requête de livraison de données émise par le terminal client à destination d'un équipement serveur (ES) connecté audit réseau, selon la revendication **9.**

12. Programme d'ordinateur (Pg1) comprenant des instructions pour la mise en oeuvre du procédé de traitement d'une requête de livraison de données selon l'une des revendications **1** à **8,** lorsqu'il est exécuté par un processeur.

13. Support d'enregistrement, lisible par un processeur, **caractérisé en ce qu'**il mémorise le programme d'ordinateur (Pg1) selon la revendication **12.**

## Patentansprüche

1. Verfahren zur Verarbeitung einer Datenübermittlungsanfrage, die von einem Client-Endgerät an das Ziel einer entfernten Server-Ausrüstung über ein Telekommunikationsnetz gesendet wird, wobei das Endgerät geeignet ist, um auf das Netz durch mindestens zwei Verbindungen gemäß separaten Zugriffstypen zuzugreifen, wobei die Daten in mindestens einen Strom mit mindestens einem vorherbestimmten Durchsatz codiert wurden, wobei der Strom zuvor in eine Vielzahl von Segmenten geteilt wurde, wobei das Verfahren die folgenden Schritte umfasst, die für ein Segment des mindestens einen Datenstroms durchgeführt werden:

   - Bestimmen (E4) mindestens einer Größe eines Teilsegments mindestens als Funktion der Anzahl von Verbindungen und einer Größe des zu übermittelnden Datenstroms;
   - Berechnen (E5) einer Partitionierung des Segments in Teilsegmente als Funktion der mindestens einen bestimmten Größe und einer Verteilung der Teilsegmente auf die Vielzahl von Verbindungen mindestens als Funktion einer Anordnung der Teilsegmente in der berechneten Partitionierung und einer vorherbestimmten Verzögerungseinschränkung;
   - Senden (E6) einer Vielzahl von Übertragungsanfragen der Teilsegmente an den Server über die Vielzahl von Verbindungen, mindestens als Funktion der berechneten Verteilung, wobei eine Übertragungsanfrage eines Teilsegments auf einer Verbindung mindestens einen Identifikator des Segments, einen Index des Beginns des Teilsegments und einen Index des Endes des Teilsegments umfasst.

2. Verfahren zur Verarbeitung einer Datenübermittlungsanfrage nach Anspruch 1, **dadurch gekennzeichnet, dass** dieses umfasst: einen Schritt (E9) des Messens der Parameter, die für einen Zustand des Netzes repräsentativ sind, auf der Vielzahl von Verbindungen, der beim Empfang von Teilsegmenten von dem Server auf den Verbindungen als Antwort auf gesendete Anfragen durchgeführt wird, und einen Schritt des Aktualisierens der Schritte des Bestimmens einer Größe eines Teilsegments pro Verbindung und des Berechnens einer Partitionierung und einer Verteilung der Teilsegmente auf den Verbindungen als Funktion der gemessenen Parameter.

3. Verfahren zur Verarbeitung einer Datenübermittlungsanfrage nach Anspruch 2, **dadurch gekennzeichnet, dass** dieses einen Schritt des Bestimmens einer Übertragungsfrequenz der Anfragen auf einer Verbindung als Funktion der gemessenen Netzparameter umfasst, und dadurch, dass die Übertragungsanfragen der Teilsegmente auf der Verbindung bei bestimmten Übertragungsfrequenzen gesendet werden.

4. Verfahren zur Verarbeitung einer Datenübermittlungsanfrage nach einem der vorhergehenden Ansprüche, **dadurch gekennzeichnet, dass** dieses umfasst: einen Schritt (E2) des Erhaltens einer Codierungsstruktur, umfassend mindestens eine Information, die für einen Typ codierter Daten in dem Segment repräsentativ ist, und die mit einer Positionsinformation der Daten dieses Typs assoziiert ist, einen Schritt des Zuordnens eines Decodierungsprioritätsniveaus zu den Teilsegmenten eines Segments als Funktion der Information des Typs und vorherbestimmter Regeln, und dadurch, dass der Schritt des Partitionierens des Segments in Teilsegmente und der Schritt des Verteilens der Teilsegmente auf die Vielzahl von Verbindungen außerdem die Decodierungsprioritätsniveaus berücksichtigen, die den Teilsegmenten zugeordnet werden.

5. Verfahren zur Verarbeitung einer Datenübermittlungsanfrage nach Anspruch 4, **dadurch gekennzeichnet, dass** die Information, die für einen Datentyp repräsentativ ist, erhalten wird, indem eine Beschreibungsanfrage des Segments an die Server-Ausrüstung gesendet wird, und indem eine Beschreibungsdatei einer Codierungsstruktur des Segments, umfassend die Information, empfangen wird.

6. Verfahren zur Verarbeitung einer Datenübermittlungsanfrage nach einem der Ansprüche 4 und 5, **dadurch gekennzeichnet, dass** der Schritt des Messens der Netzparameter das Messen einer Latenzzeit (TL) zwischen dem Senden einer Übertragungsanfrage (SReq) mindestens eines Teilsegments auf einer Verbindung und dem Empfang des angefragten Teilsegments umfasst, und dadurch, dass das Verfahren in dem Fall einer größeren gemessenen Latenzzeit als eine vorherbestimmte Schwelle für die Anfrage umfasst:
einen Schritt (E10) des Entscheidens des Auslösens einer Aktion mindestens als Funktion eines Decodierungsprioritätsniveaus, das dem angefragten Teilsegment zugeordnet wird, wobei die Aktion zu einer Gruppe gehört, die mindestens umfasst:

- erneutes Übertragen einer neuen Übertragungsanfrage desselben Teilsegments auf einer anderen Verbindung;
- Annullieren der laufenden Anfrage.

7. Verfahren zur Verarbeitung einer Datenübermittlungsanfrage nach Anspruch 6, **dadurch gekennzeichnet, dass** das Client-Endgerät (UE) und die Server-Ausrüstung (ES) eingerichtet sind, gemäß einem Kommunikationsprotokoll mit einem Bestätigungsaustausch zu kommunizieren, **dadurch gekennzeichnet, dass**, wenn die entschiedene Aktion eine Annullierung der laufenden Anfrage ist, das Verfahren einen Schritt des Übertragens einer Bestätigungsnachricht an den Server umfasst.

8. Verfahren zur Verarbeitung einer Datenübermittlungsanfrage nach einem der Ansprüche 5 bis 7, **dadurch gekennzeichnet, dass** die empfangene Beschreibungsdatei (SSIX) außerdem eine Information umfasst, die für eine Zugehörigkeitsgruppe der Daten repräsentativ ist, und dadurch, dass mindestens ein erster Strom codierter Daten mit einem ersten Durchsatz und ein zweiter Strom mit einem zweiten Durchsatz verfügbar sind, wobei das Verfahren umfasst: einen Schritt des Auswählens eines Stroms, in dem ein Teilsegment des laufenden Segments, mindestens als Funktion der gemessenen Netzparameter, des Decodierungsprioritätsniveaus des Teilsegments der Zugehörigkeitsgruppe der Daten des Teilsegments und der vorherbestimmten Verzögerungseinschränkung (CD) angefragt wird.

9. Vorrichtung (100) zur Verarbeitung einer Datenübermittlungsanfrage, die von einem Client-Endgerät (UE) an das Ziel einer entfernten Server-Ausrüstung (ES) über ein Telekommunikationsnetz (RT) gesendet wird, wobei das Endgerät geeignet ist, um auf das Netz durch mindestens zwei Verbindungen gemäß separaten Zugriffstypen zuzugreifen, wobei die Daten in mindestens einen Strom mit mindestens einem vorherbestimmten Durchsatz codiert wurden, wobei der Strom zuvor in eine Vielzahl von Segmenten geteilt wurde, wobei die Vorrichtung die folgenden Einheiten umfasst, die für ein Segment (S) des mindestens einen Datenstroms verwendet werden:

- Bestimmen (112) mindestens einer Größe eines Teilsegments mindestens als Funktion der Anzahl von Verbindungen und einer Größe des zu übermittelnden Datenstroms;
- Berechnen (113) einer Partitionierung des Segments (S) in Teilsegmente als Funktion der mindestens einen bestimmten Größe und einer Verteilung der Teilsegmente auf die Vielzahl von Verbindungen mindestens als Funktion einer Anordnung der Teilsegmente in der berechneten Partitionierung und einer vorherbestimmten Verzögerungseinschränkung (CD); und
- Senden (114) einer Vielzahl von Übertragungsanfragen der Teilsegmente an den Server über die Vielzahl von Verbindungen, mindestens als Funktion der berechneten Verteilung, wobei eine Übertragungsanfrage eines Teilsegments auf einer Verbindung mindestens einen Identifikator des Segments, einen Index des Beginns des Teilsegments und einen Index des Endes des Teilsegments umfasst.

10. Client-Endgerät (UE), welches geeignet ist, um auf ein Kommunikationsnetz durch mindestens zwei Verbindungen gemäß getrennten Zugriffstypen zuzugreifen, **dadurch gekennzeichnet, dass** dieses eine Vorrichtung zur Verarbeitung einer Übermittlungsanfrage, die von dem Client-Endgerät an das Ziel einer mit dem Netz verbundenen Server-Ausrüstung gesendet wird, nach Anspruch 9 umfasst.

11. Proxy Modul (MP), welches zur Trennung eines Client-Endgeräts (UE) und von mindestens zwei Verbindungen gemäß separaten Zugriffstypen eingerichtet ist, um auf ein Kommunikationsnetz (RT) zuzugreifen, **dadurch gekennzeichnet, dass** dieses eine Vorrichtung (100) zur Verarbeitung einer Datenübermittlungsanfrage, die von dem Client-Endgerät an das Ziel einer mit dem Netz verbundenen Server-Ausrüstung (ES) gesendet wird, nach Anspruch 9 umfasst.

12. Computerprogramm (Pg1), umfassend Instruktionen zur Durchführung des Verfahrens zur Verarbeitung einer Datenübermittlungsanfrage nach einem der Ansprüche 1 bis 8, wenn dieses von einem Prozessor ausgeführt wird.

13. Prozessorlesbares Speichermedium, **dadurch gekennzeichnet, dass** dieses das Computerprogramm (Pg1) nach Anspruch 12 speichert.

**Claims**

1. A method for processing a request for the delivery of data sent by a customer terminal to a remote server equipment via a telecommunication network, said terminal being adapted to access said network by at least two links according to distinct access types, said data having been encoded in at least one stream with at least a predetermined bit rate, said stream having been previously cut into a plurality of segments, said method comprising the following steps, implemented for a segment of the at least one data stream:

   - Determining (E4) at least one sub-segment size at least based on the number of links and a size of the data stream to be delivered;
   - Calculating (E5) a partitioning of the segment into sub-segments according to said at least one set size and a distribution of the sub-segments over the plurality of links at least in accordance with a scheduling of the sub-segments in the partitioning calculated and a predetermined time constraint;
   - Sending (E6) a plurality of transmission requests of the sub-segments to the server over the plurality of links, at least according to the distribution calculated, a transmission request of a sub-segment over a link comprising at least one identifier of the segment, an index of a sub-segment start and an index of a sub-segment end.

2. A method for processing a request for the delivery of data according to claim 1, **characterised in that** it comprises a step (E9) of measuring parameters representative of a network state over the plurality of links, implemented upon receiving sub-segments from the server on said links in response to the transmission requests and a step of updating the steps of determining a sub-segment size per link and calculating a partitioning and a distribution of the sub-segments over the links according to the measured parameters.

3. A method for processing a request for the delivery of data according to claim 2, **characterised in that** it comprises a step of determining a frequency for transmitting the requests over a link according to the measured network parameters and **in that** the transmission requests of the sub-segments over said link are sent at the determined transmission frequencies.

4. A method for processing a request for the delivery of data according to any of the previous claims, **characterised in that** it comprises a step (E2) of obtaining an encoding structure comprising at least one piece of information representative of a type of data encoded in the segment associated with position information of the data of this type, a step of assigning a decoding priority level to the sub-segments of a segment according to the type information and to predetermined rules, and **in that** the step of partitioning the segment into sub-segments and the step of distributing the sub-segments over the plurality of links also take into account the levels of decoding priorities assigned to the sub-segments.

5. A method for processing a request for the delivery of data according to claim 4, **characterised in that** the information representative of a type of data is obtained by sending a request for description of the segment to the server equipment and by receiving a description file of an encoding structure of the segment comprising said information.

6. A method for processing a request for the delivery of data according to any of the claims 4 and 5, **characterised in that** the step of measuring network parameters comprises measuring a latency time (TL) between the sending of a transmission request (SReq) of at least one sub-segment over a link and the reception of the requested sub-segment and **in that** said method comprises, in the case of a latency time measured greater than a predetermined threshold for said request, a decision step (E10) for triggering an action at least as a function of a priority level of decoding assigned to the requested sub-segment, said action belonging to a group comprising at least:

- Retransmission of a new transmission request from the same sub-segment to another link;
- Cancellation of the current request.

7. A method for processing a request for the delivery of data according to claim 6, **characterised in that** the customer terminal (UE) and the server equipment (ES) are arranged to communicate according to a communication protocol with acknowledgment exchange, **characterised in that** when the action decided is a cancellation of the current request, the method comprises a step of transmitting an acknowledgment message to the server.

8. A method for processing a request for the delivery of data according to any of the claims 5 to 7, **characterised in that** the received description file (SSIX) further comprises information representative of a data membership group and at least one first encoded data stream being available at a first bit rate and a second stream at a second bit rate, the method comprises a step of selecting a stream in which a sub-segment of the current segment can be requested, at least based on the measured network parameters, the decoding priority level of the subset of the membership group of data of the sub-segment and the predetermined time constraint (CD).

9. A device (100) for processing a request for the delivery of data sent by a customer terminal (UE) to a remote server equipment (ES) via a telecommunication network (RT), said terminal being adapted to access said network by at least two links according to distinct access types, said data having been encoded in at least one stream with at least a predetermined bit rate, said stream having been previously cut into a plurality of segments, said device comprising the following units, implemented for a segment (S) of said at least one data stream:

- Determination (112) of at least one sub-segment size at least based on the number of links and a size of the data stream to be delivered;
- Calculation (113) of a partitioning of the segment (S) into sub-segments according to said at least one set size and a distribution of the sub-segments over the plurality of links at least in accordance with a scheduling of the sub-segments in the partitioning calculated and a predetermined time constraint (CD); and
- Sending (114) of a plurality of transmission requests of the sub-segments to the server over the plurality of links, at least according to the distribution calculated, a transmission request of a sub-segment over a link comprising at least one identifier of the segment, an index of a sub-segment start and an index of a sub-segment end.

10. A customer terminal (UE) adapted to access a communications network by at least two links according to distinct access types, **characterised in that** it comprises a device for processing a request for the delivery of data sent by the customer terminal to a server equipment connected to said network according to claim 9.

11. A proxy module (MP) arranged to cut off a customer terminal (UE) and at least two links according to distinct access types to access a communications network (RT), **characterised in that** it comprises a device (100) for processing a request for the delivery of data sent by the customer terminal to a server equipment (ES) connected to said network, according to claim 9.

12. A computer program (Pg1) comprising instructions for implementing the method for processing a request for the delivery of data according to one of claims 1 to 8, when executed by a processor.

13. A computer-readable recording medium, **characterised in that** it stores the computer program (Pg1) according to claim 12.

FIG. 1

FIG. 2

FIG. 3

FIG. 4A

FIG. 4B

S

| $SS_{T11}$ | $SS_{T21}$ | $SS_{T31}$ | $SS_{T12}$ | $SS_{T22}$ | $SS_{T32}$ | ... |
|---|---|---|---|---|---|---|

L1

L2

L3

FIG. 5A

S

| $SS_{T11}$ | $SS_{T12}$ | $SS_{T21}$ | $SS_{T31}$ | $SS_{T13}$ | $SS_{T14}$ | $SS_{T22}$ | $SS_{T32}$ | ... |
|---|---|---|---|---|---|---|---|---|

L1

L2

L3

FIG. 5B

I

P

| SS$_{T11}$ | SS$_{T21}$ | SS$_{T12}$ | SS$_{T22}$ | SS$_{T13}$ | SS$_{T23}$ | SS$_{T24}$ | SS$_{T31}$ | ... |

S

L1

L2

L3

## FIG. 5C

LDL= 266ms

L'0  12 Mbps

Intra                                                                          266ms

P1    13ms
B1    2,6ms
B2    3,3ms
P2    23ms
B3    6,6ms

LDL'=105ms

L'1    Intra
L'2    Intra
L'3    Intra
L'4    Intra
L'5    Intra

P1    13ms
B1    2,6ms
B2    3,3ms
P2    23ms
B3    6,6ms

time

40    80    120    160    200    240    280    320    360

## FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014096463 A

**Littérature non-brevet citée dans la description**

- **THOMAS STOCKHAMMER.** Dynamic Adaptive Streaming over http- Standards and Design Principles. *les Proceedings de la « ACM Conférence on Multimedia Systems,* Février 2011, 133-144